(19) Europäisches Patentamt
European Patent Office
Office européen des brevets

(11) **EP 2 105 921 A1**

(12) **DEMANDE DE BREVET EUROPEEN**

(43) Date de publication:
**30.09.2009 Bulletin 2009/40**

(51) Int Cl.:
***G11B 7/0045*** *(2006.01)* ***G11B 7/013*** *(2006.01)*

(21) Numéro de dépôt: **09154424.7**

(22) Date de dépôt: **05.03.2009**

(84) Etats contractants désignés:
**AT BE BG CH CY CZ DE DK EE ES FI FR GB GR HR HU IE IS IT LI LT LU LV MC MK MT NL NO PL PT RO SE SI SK TR**
Etats d'extension désignés:
**AL BA RS**

(30) Priorité: **28.03.2008 FR 0801716**

(71) Demandeur: **Commissariat à l'Energie Atomique Bâtiment D "Le Ponant"
25 rue Leblanc
75015 Paris (FR)**

(72) Inventeur: **Martinez, Christophe
38100, GRENOBLE (FR)**

(74) Mandataire: **Guérin, Michel
Marks & Clerk France
Conseils en Propriété Industrielle
Immeuble " Visium "
22, avenue Aristide Briand
94117 Arcueil Cedex (FR)**

(54) **Procédé de stockage d'images et support de stockage correspondant**

(57) L'invention concerne un procédé de stockage d'images sur un support pouvant être gravé à partir d'un procédure d'écriture par un faisceau laser, dans lequel un substrat, de préférence souple, comprend une multiplicité de plages de dimensions latérales inférieures à 10 millimètres, réservées chacune à une image, et une plage réservée à une image comprend autant de zones élémentaires (16) qu'il y a de pixels d'image à stocker, l'image stockée dans une plage pouvant être lue par des moyens d'agrandissement optique. Chaque zone élémentaire comporte un motif (17) inscrit dont le diamètre représente un niveau de gris respectif parmi n niveaux possibles.

**Fig. 7**

EP 2 105 921 A1

**Description**

L'invention concerne le stockage d'images en vue d'un archivage à très haute densité.

Les photographies sont de plus en plus produites par des procédés électroniques de capture d'image et sont stockées sous leur format original, comprimé ou non. C'est sous cette forme qu'on les conserve en général, sur des supports de stockage tels que des disques durs d'ordinateur, ou des disques optiques numériques enregistrables (CD ROM, DVD, etc.), ou encore des mémoires flash. Actuellement l'essentiel des photographies numériques du grand public est stocké de cette manière.

La question de la pérennité de ces moyens de stockage se pose, d'abord en ce qui concerne la durée de vie de ces supports ; un disque dur a une durée de vie estimée à quelques années avec en permanence le risque d'une panne brutale ; les supports de stockage optique enregistrables ont des durées de vie estimées à plusieurs dizaines d'années hors utilisation ; en cas d'utilisation, l'apparition de rayures peut réduire dramatiquement la durée de vie. Mais la question se pose aussi en ce qui concerne la pérennité des formats de codage qui peuvent devenir obsolètes sur de longues durées de stockage et notamment lorsqu'il s'agit d'archiver des images.

On a déjà proposé, dans le brevet US 6,442,296 de graver directement l'image brute sur un support de type microfilm ou un disque optique. L'image brute est gravée dans un espace très réduit par écriture directe avec un laser, chaque pixel d'image est représenté par des points inscrits ou non inscrits. Si l'image est en couleurs plusieurs images sont stockées, correspondant à la décomposition de l'image initiale en trois couleurs primaires. Si l'image contient des niveaux de gris, les pixels sont démultipliés par tramage : un pixel est représenté par plusieurs points inscrits ou non inscrits. Les images peuvent être récupérées par un procédé de lecture ne reposant pas sur l'utilisation d'un décodeur et elles peuvent également être observées directement au microscope.

Le brevet EP1310950 décrit le même principe d'archivage direct d'images sur un disque optique. Les images sont inscrites par une optique d'écriture en champ proche et peuvent être observées directement au microscope.

La présente invention a pour but de permettre le stockage d'images brutes, non codées, à très forte densité, par un procédé d'écriture très rapide, en autorisant un contenu d'image comportant des niveaux de gris.

L'écriture est une écriture directe par laser, avec un balayage rapide du spot sur la surface à inscrire. Selon l'invention, l'information de niveau de gris est inscrite sous forme d'une dimension (dimension latérale ou surface) de motif parmi plusieurs dimensions possibles représentant chacune un niveau de gris respectif. La dimension variable de motif est obtenue en agissant notamment sur la puissance du faisceau laser, et/ou sur la taille de la tache de focalisation du faisceau sur une couche sensible.

L'invention propose par conséquent un procédé de stockage d'images à haute densité sur un support pouvant être gravé à partir d'un procédure d'écriture par un faisceau laser, dans lequel une zone d'écriture comprend une multiplicité de plages de dimensions latérales inférieures à 10 millimètres réservées chacune à une image, et une plage réservée à une image comprend autant de zones élémentaires qu'il y a de pixels d'image à stocker, l'image stockée dans une plage pouvant être observée par des moyens d'agrandissement optique, **caractérisé en ce que** les zones élémentaires comportent des motifs inscrits sous forme de taches de diamètres différents, une valeur de diamètre représentant un niveau de gris respectif parmi n niveaux possibles (n entier supérieur à 2). La tache n'étant pas exactement circulaire, le mot "diamètre", habituellement réservé à un cercle parfait, est considéré ici comme étant le diamètre d'un cercle représentant approximativement la tache.

Un ou plusieurs faisceaux laser ayant des ouvertures numériques différentes peuvent être utilisés pour inscrire des motifs de taches dans des gammes de diamètres différentes ; il est préférable d'utiliser plusieurs faisceaux à qui on affecte des tailles de tache focale différentes ou des gammes de tailles de tache focale différentes ; de cette manière les informations peuvent être inscrites plus rapidement. Toutefois, on peut aussi envisager que des motifs de diamètres différents soient obtenus par un seul faisceau laser, à partir d'une modulation de la puissance du laser, et on peut envisager un système mixte dans lequel il y a plusieurs faisceaux laser correspondant à des gammes de tailles de tache focale différentes, chaque laser étant modulable en puissance ; en fonction d'un niveau de gris reçu pour un pixel déterminé on définit un diamètre de motif correspondant à ce niveau de gris à la fois par le choix d'un laser correspondant à une gamme de diamètres de motif donnée et par le choix d'une puissance d'émission de ce laser.

L'inscription par un faisceau laser se fait directement sur le support de stockage si celui-ci comporte une couche sensible pouvant enregistrer de manière permanente des informations inscrites par un laser. Elle peut aussi se faire indirectement en deux phases : inscription dans une couche provisoire sensible au faisceau laser (une résine photosensible) suivie d'une étape de développement de la couche sensible et de gravure d'une couche de stockage permanente située sous la couche sensible provisoire. Dans ce cas, les motifs formés par le faisceau laser sont reproduits dans la couche de stockage permanente.

Le balayage du faisceau laser sur la surface à inscrire peut se faire

- soit sur une surface plane telle que celle d'un disque optique ; le disque tourne autour d'un axe perpendiculaire à sa surface et le balayage est en spirale, le faisceau laser est dirigé parallèlement à l'axe de rotation et se déplaçant en translation selon une droite parallèle à la surface du disque pendant que le disque tourne ;

- soit sur une surface cylindrique et dans ce dernier cas, on utilisera de préférence un support de stockage souple pouvant être appliqué sur la surface cylindrique pendant l'écriture puis monté dans un cadre plan rigide après écriture ; le faisceau laser est dirigé vers la surface cylindrique et se déplace en translation parallèlement à l'axe de rotation du cylindre pendant que celui-ci tourne ;
- soit encore sur une surface plane qui défile à la manière d'une bande magnétique entraînée par des rouleaux ; le faisceau laser est dirigé perpendiculairement à cette surface et se déplace en translation parallèlement à cette surface et perpendiculairement à la direction de défilement de la surface ; là encore on utilisera un support souple, maintenu en place sur une bande d'entraînement.

On peut prévoir qu'une zone élémentaire correspondant à un pixel comprend une seule tache ayant un diamètre parmi n=N si N est le nombre total de niveaux de gris souhaité ; ou bien on peut prévoir que la zone élémentaire est divisée en K sous-zones pouvant chacune recevoir un motif ayant un diamètre pris parmi n=N/K diamètres possibles, où N est encore le nombre total de niveau de gris souhaité pour chaque pixel.

Outre ce procédé, l'invention concerne aussi un système de stockage d'images sur un substrat inscriptible au moyen d'un laser d'écriture, les images étant stockées sous forme analogique, lisible par des moyens d'agrandissement optique, dans une zone d'écriture comprenant une multiplicité de plages de dimensions inférieures à 10 millimètres de côté correspondant chacune à une image de format très petit non observable à l'oeil nu, chaque plage comprenant autant de zones élémentaires qu'il y a de pixels de l'image à stocker ; le système est **caractérisé en ce qu**'il comporte une tête optique à faisceau laser et des moyens de commande de la tête optique, aptes à recevoir, pour l'écriture de chaque pixel, une information de niveau de gris du pixel, et aptes à commander l'inscription par la tête, dans une zone élémentaire correspondant au pixel, d'un motif ayant un diamètre déterminé parmi n diamètres représentant chacun un niveau de gris respectif parmi n niveaux possibles, n entier supérieur à 2. Plusieurs lasers peuvent être focalisés par des optiques respectives d'ouvertures numériques différentes placées à des hauteurs différentes au-dessus du substrat de stockage. Un laser déterminé est sélectionné en fonction du niveau de gris reçu.

Dans le cas où la couche sensible au laser est formée sur un substrat souple, potentiellement fragile, on placera ce support de préférence entre deux plaques transparentes dans le visible mais opaques dans les ultra violets. Les plaques sont maintenues mécaniquement par l'assemblage d'un cadre en deux parties, à l'image de ce qui est fait dans les diapositives. Ce cadre en matière plastique peut comporter des champs permettant de renseigner le contenu général du support, soit sous forme lisible (chaînes de caractères, code couleur, ...) soit sous forme digitale (code barre) afin de permettre une bonne gestion. Le cadre plastique peut également intégrer une puce de communication à distance de type RFID (Radio Frequency Identification) pour un référencement à distance.

D'autres caractéristiques et avantages de l'invention apparaîtront à la lecture de la description détaillée qui suit et qui est faite en référence aux dessins annexés dans lesquels :

- la figure 1 décrit un exemple de support de stockage suivant l'invention ;
- la figure 2 décrit une coupe du support de stockage de l'invention ;
- la figure 3 décrit le cas d'un support de stockage suivant l'invention dans lequel une puce RFID est insérée ;
- la figure 4 illustre la zone de stockage d'une image dans le support de stockage de l'invention ;
- la figure 5 décrit le procédé d'écriture dans le cas d'un support de stockage souple monté sur un cylindre ;
- la figure 6 décrit un mode de réalisation de la fixation du support de stockage de l'invention sur le tambour d'écriture ;
- la figure 7 décrit le mode de codage des niveaux de gris des pixels image par la modification de la surface d'un motif ;
- la figure 8 décrit le mode de réalisation suivant lequel la taille des motifs est obtenue par le changement de la puissance du laser d'écriture.
- la figure 9 décrit un mode de réalisation de l'invention dans lequel plusieurs supports peuvent être fabriqués en série ou en parallèle pour un même mouvement du tambour ;
- la figure 10 décrit un mode de réalisation dans lequel le support de stockage de l'invention est entrainé par une surface souple tendue entre deux rouleaux ;
- la figure 11 décrit un mode de réalisation dans lequel deux têtes d'écriture sont utilisées en série ;
- la figure 12 décrit un mode de réalisation dans lequel plusieurs têtes d'écriture sont utilisées en parallèle ;
- la figure 13 décrit un mode de réalisation dans lequel plusieurs têtes d'écriture d'ouvertures numériques différentes sont utilisées en série ;
- la figure 14 représente des gaussiennes de distribution d'énergie de deux faisceaux lasers différents ;
- la figure 15 représente des courbes définissant le rayon d'un motif inscrit en fonction d'une part de la taille de tache focale du faisceau (liée à l'ouverture numérique) et d'autre part de la puissance du laser ;
- la figure 16 représente le principe d'une écriture par plusieurs faisceaux lasers affectés chacun à une gamme de niveaux de gris déterminée.

Une photographie numérique correspond à un maillage de données numériques dont le maillon élémentaire est le pixel. A chaque pixel de l'image correspond une valeur de gris qui s'échelonne sur une échelle de codage exprimée en bit. Une image stockée avec 8 bits a une échelle de $2^8 = 256$ niveaux de gris. Une image peut comporter quelques centaines de milliers à quelques millions de pixels, dépendant de la résolution de l'appareil qui l'a prise.

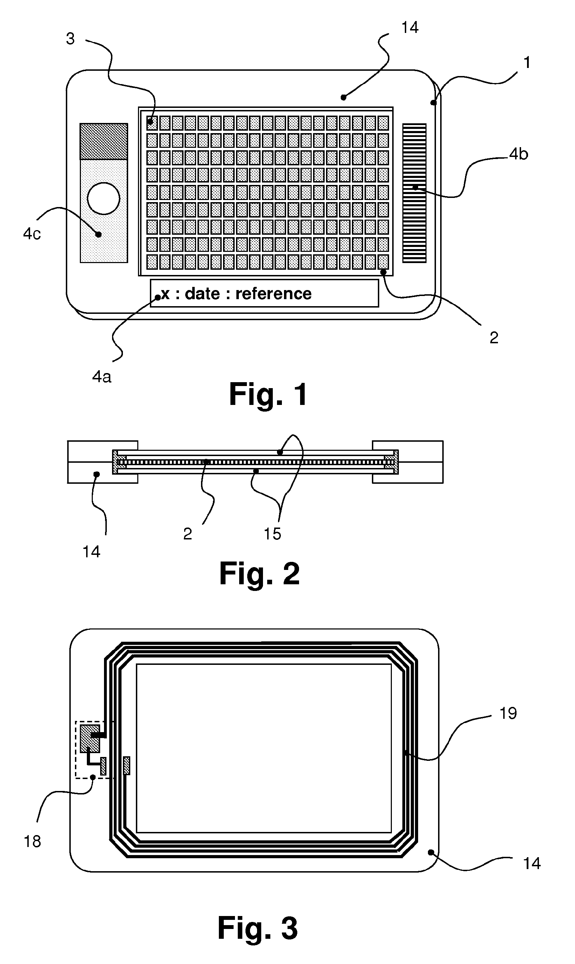

La figure 1 représente en vue de face un support de stockage de longue durée 1. La figure 2 représente ce support en coupe latérale. Il comprend un substrat 2 contenant une zone active de stockage. Le substrat est dans cet exemple un substrat souple maintenu en place dans un cadre 14. Le format peut être de quelques centimètres de côté par exemple. Ce support de stockage est destiné à être lu à l'aide d'un microscope dont le pouvoir grossissant est en rapport avec la petitesse des images qui ont été stockées. Les images sont en effet inscrites directement, sous forme observable et non sous forme codée, sur le substrat.

Chaque image est stockée dans une plage d'écriture 3 du substrat 2. A titre d'exemple, une image peut avoir des dimensions latérales de l'ordre du millimètre, par exemple de 1 à 5 millimètres de côté, ce qui permet de stocker plusieurs centaines d'images sur un support. Ces images ne sont pas observables à l'oeil nu ; elles sont observables à travers un microscope ou un projecteur de fort grossissement.

Le substrat 2 est de préférence en matière plastique souple et peut être protégé par un cadre 14 enfermant le substrat entre deux plaques de protection rigides 15, qui peuvent être transparentes à la lumière visible sans toutefois laisser passer les ultraviolets qui pourraient détériorer le support à long terme. Ce cadre permet également de placer des étiquettes de référencement du support, sous format analogique ou numérique. Il peut aussi comporter des zones réservées à d'autres données d'identification, par exemple une série de caractères (4a), un code digital (type code barre) 4b, un code de couleur (4c).

Dans le cas d'une application professionnelle ou un grand nombre de supports serait envisagé on peut également inclure dans le cadre des moyens de référencement à distance de type RFID (Radio Frequency Identification) sous la forme d'une puce 18 et d'une antenne 19 (figure 3).

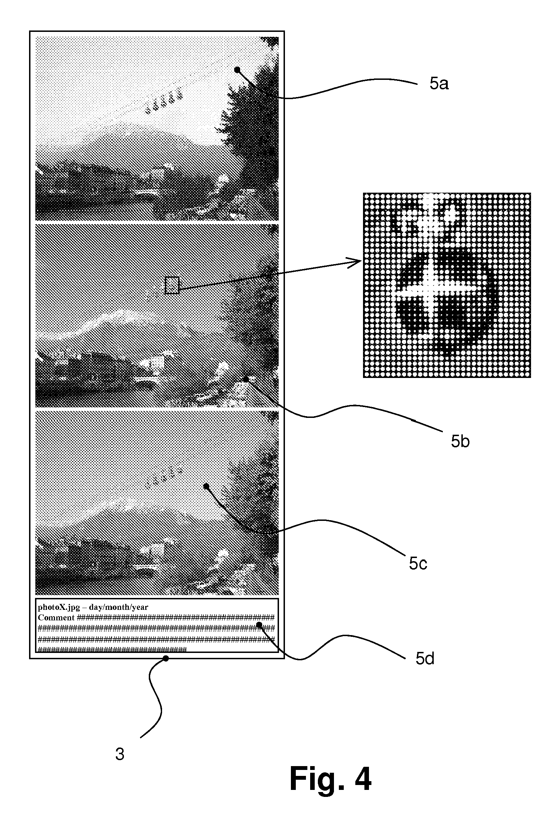

Si l'image est en couleurs, des images partielles correspondant à chaque couleur primaire seront extraites de l'image et stockées séparément dans une même plage d'écriture 3 affectée à cette image, ou dans trois plages voisines. La figure 4 représente symboliquement trois représentations 5a, 5b et 5c, rouge, verte, bleue d'une même image de paysage. La plage d'écriture 3 peut comporter également une partie 5d où peuvent être écrites physiquement, et de manière observable par l'oeil humain après agrandissement, des informations relative à l'image ; ces informations peuvent être notamment des informations fournies sous forme numérique par l'appareil de prise de vue, converties en écriture lisible par l'oeil humain ; ces informations sont typiquement la date de prise de vue, la focale, l'ouverture, etc. ainsi que des commentaires quelconques ajoutés par l'utilisateur.

Chaque image est inscrite dans le substrat 2 pixel par pixel par une série de motifs élémentaires ayant différentes superficies ; ces motifs sont inscrits chacun dans une zone élémentaire respective affectée au pixel en cours d'écriture ; ces motifs sont des taches de diamètres différents ; le diamètre des taches inscrites est directement lié au niveau de gris du pixel. Selon la nature du support, ces motifs peuvent être des ouvertures dans un fond opaque, ou des motifs opaques dans un fond transparent, ou des motifs réfléchissants sur un fond absorbant ou transparent, ou des motifs absorbants ou transparents sur un fond réfléchissant. Pour chaque pixel d'image, le diamètre et la superficie du motif sont directement reliés à la valeur du niveau de gris du pixel qui lui correspond comme le montre, sur la figure 2, l'agrandissement d'une petite partie de l'image. On reviendra plus loin sur la taille des motifs élémentaires à l'intérieur de chaque pixel.

Les motifs seront inscrits dans le substrat 2 par un faisceau laser d'écriture directe balayant la surface du substrat. Ils sont inscrits soit directement dans une couche de stockage permanente soit dans une couche provisoire qui sert à graver une couche permanente.

La résolution spatiale de la machine d'écriture va définir la distance entre les motifs et donc la quantité d'information pouvant être stockée sur une surface donnée.

Exemple numérique :

On se base sur la répartition d'image telle que présentée en figure 4 dans le cas de la représentation d'une photographie de 3 millions de pixels. Pour ce format on a généralement un maillage de 2048 x 1536 pixels. On choisit une bordure de cellule et une distance entre les images égales à 100 pixels. On choisit pour la zone de commentaire une taille de 2048 x 512 pixels.

La taille de la cellule 3 est calculée en fonction du pas p choisi entre les motifs de pixel à pixel.

$$S_{cellule} = \left[(2048 + 200) \times p\right] \times \left[(3 \times 1536 + 500 + 512) \times p\right]$$

Pour un pas p = 0,8 μm on a une cellule de taille : 1,8 mm x 4,5 mm.

Un substrat de stockage de taille 4,5 cm x 9 cm permet donc de conserver 500 photographies couleurs à 3 Mpixels (1 million de pixels par couleur) si on peut inscrire l'information de gris d'un pixel dans un espace de 0,8x0,8 micromètre carré. L'écriture laser sur une couche sensible permet de le faire.

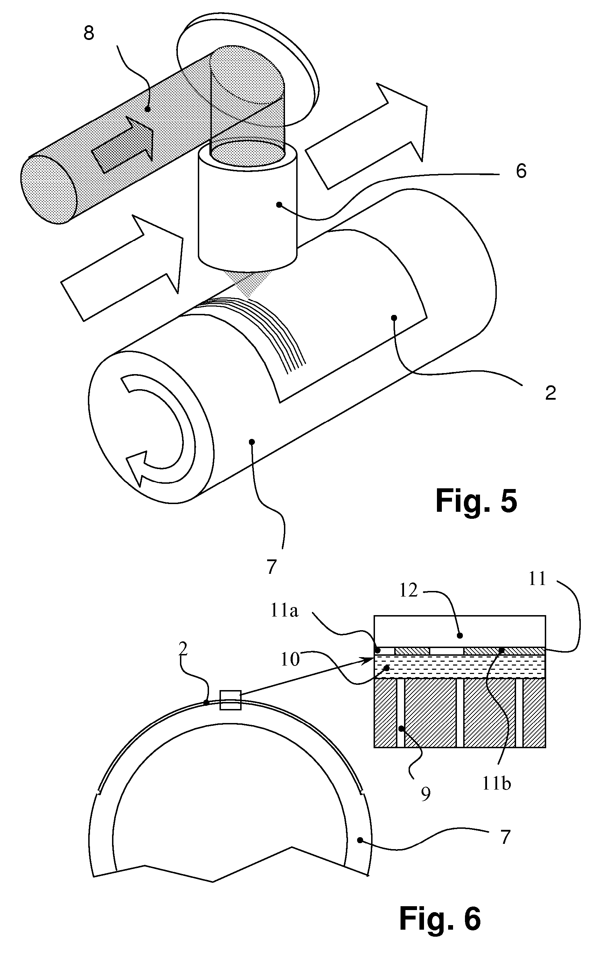

La figure 5 décrit schématiquement le principe de la fabrication du support de stockage. Il s'agit d'un équipement d'écriture directe laser, basé sur la translation d'une tête optique 6 par rapport à un tambour mobile 7 mis en rotation. Le substrat de stockage 2, souple, est appliqué contre le tambour 7 et le faisceau laser 8 engendré et focalisé par la tête optique 6 balaie sa surface. La tête optique 6 comprend une partie optique pour la mise en forme du faisceau d'écriture et une partie opto-mécanique non représentée qui garantit le maintien du point de focalisation au niveau du substrat dans une gamme de profondeur de champ donné, tout en assurant le déplacement longitudinal de la tête. Ce déplacement est parallèle à l'axe de rotation du tambour et peut se faire pas à pas ou en continu. L'écriture se fait ligne par ligne pendant la rotation du tambour.

La figure 6 montre que le substrat souple 2 peut être maintenu en place contre le tambour pendant l'écriture par un système d'aspiration 9. Le substrat de stockage 2 comprend un substrat proprement dit 10 recouvert d'une couche sensible 11 elle-même recouverte éventuellement par une couche transparente de protection 12 du côté où est appliqué le faisceau laser d'écriture. Le substrat 10 est en matière organique (par exemple un polymère qui peut être thermoplastique). La couche 11 est une couche active, sensible à l'action optique ou thermique du faisceau laser d'écriture. On comprendra que la couche 11 présente pendant l'écriture n'est pas forcément la couche comportant les informations à la fin de la fabrication : il peut y avoir des étapes intermédiaires de production d'une couche de stockage à partir de la couche sensible au faisceau laser d'écriture comme on l'expliquera plus loin.

On a représenté par des parties sombres 11a et des parties claires 11 b l'information d'image inscrite, c'est-à-dire que les parties 11 b sont des zones dans lesquelles une action optique ou thermique a été exercée par le faisceau laser et les parties 11a sont des zones dans lesquelles il n'y a pas eu une telle action.

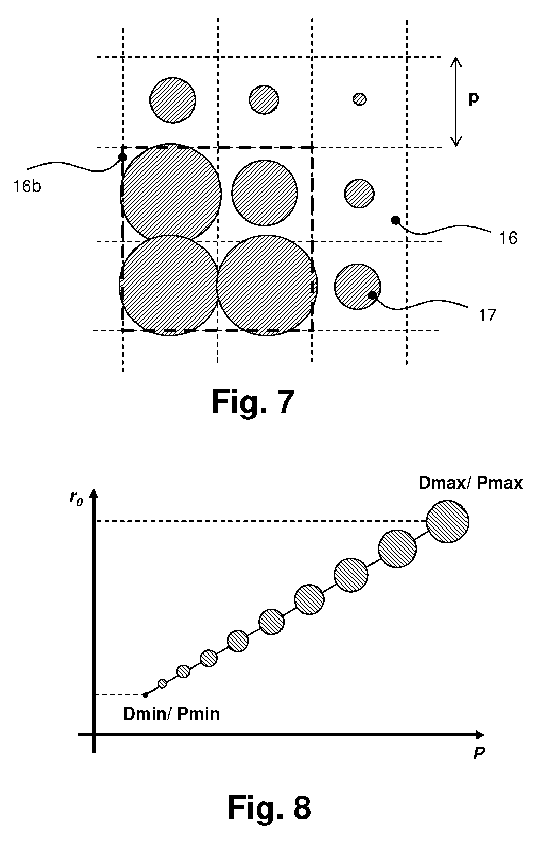

La figure 7 décrit un mode de réalisation du codage analogique des données. Chaque pixel de l'image est caractérisé par une valeur Vng dite de niveau de gris définie sur une échelle allant de 0 à $N=(2^{nb}-1)$ où nb est le nombre de bits de codage. Cette valeur est fournie sous forme numérique par l'appareil de prise de vue, et elle fait partie du fichier numérique représentant l'image, fichier à partir duquel le stockage sera effectué.

Chaque pixel 16 correspond à une zone élémentaire carrée (elle pourrait être rectangulaire) de côté p qui contient un motif 17 inscrit par le laser d'écriture ; la dimension de ce motif (en pratique sa surface) dépend du niveau de gris souhaité pour le pixel considéré. Ce motif est idéalement circulaire pour des raisons de simplicité de fabrication, mais il peut également être elliptique. S'il est circulaire, ce qui est le plus simple, sa taille est donnée par une valeur de diamètre échelonnée entre un diamètre minimum $D_{min}$ et maximum $D_{max}$. Le nombre n de diamètres possibles de $D_{min}$ à $D_{max}$ est $2^{nb}-1$. La taille maximale $D_{max}$ peut être égale au côté p du carré définissant le pixel, ou même plus si on veut augmenter le taux de remplissage. Pour avoir un bon taux de remplissage, les pixels sont adjacents, c'est-à-dire que le côté du carré définissant le pixel est égal au pas p de répartition des pixels, en ligne comme en colonne (le pas pouvant être différent en ligne et en colonne si les pixels sont de forme elliptique). Le diamètre des plus grands motifs inscrits peut être $2^{1/2}$ fois le pas p pour obtenir un recouvrement complet de pixels adjacents ayant tous le niveau de gris correspondant au plus grand diamètre de motif.

La taille minimale des plus petits motifs inscrits est $D_{min}$ et sera définie par rapport au pouvoir de résolution du système de lecture considéré. Des pixels de niveau de gris égal à zéro correspondront par ailleurs à une absence complète d'action par le faisceau laser pour un pixel (extinction ou réduction significative de puissance au-dessous d'un seuil).

On peut aussi envisager de répartir l'information sur plusieurs sous-pixels pour augmenter la gamme de niveaux de gris ou pour faciliter la formation de motifs de superficie différente pour un même nombre N de niveaux de gris : l'information correspondant au niveau de gris d'un pixel donnera lieu à une distribution de motifs sur plusieurs zones rectangulaires adjacentes correspondant chacune à une partie de pixel. La figure 7 illustre cette possibilité en montrant un pixel 16b, entouré d'un trait plus épais, divisé en quatre zones, chacune pouvant être remplie par un motif de diamètre plus ou moins large défini par le faisceau laser. Cela permet d'obtenir une gamme plus étendue de niveau de gris à partir d'une plage limitée de diamètres de motifs disponibles, la contrepartie étant une surface globale d'image plus importante pour une taille $D_{max}$ de motif donnée susceptible d'être inscrite par un faisceau laser. En pratique, si N est le nombre de niveaux de gris souhaité et si chaque zone élémentaire de pixel est divisée en K sous-zones, il faut que le ou les lasers d'écriture soient capables d'écrire des motifs ayant n=N/K diamètres différents possibles, n étant supérieur à 2. Le niveau de gris le plus élevé conduira à l'inscription d'un motif de taille maximale $D_{max}$ dans chacune des sous-zones, aboutissant à une surface de motif globale K fois plus grande que celle que peut produire un seul faisceau laser.

L'obtention de plusieurs valeurs de diamètre du motif correspondant à une zone élémentaire (ou une sous-zone) peut être réalisée de plusieurs façons et repose sur la taille de la tache de focalisation (ou spot) du laser d'écriture directe qui va servir à créer le motif.

Un mode de réalisation privilégié utilise un matériau à transition de phase (en anglais : phase transition material ou PTM). Une couche de ce matériau est déposée sur le substrat dans un premier état A (par exemple amorphe). L'insolation locale de ce matériau échauffe la zone concernée. En suivant une dynamique de chauffage et de refroidissement particulière, la zone insolée peut, au terme de l'exposition lumineuse, se retrouver dans un autre état B (par exemple cristallin). Pour certains matériaux PTM les deux états ont une sélectivité de gravure chimique différente. On peut ainsi dissoudre le matériau B sans modifier le matériau A. Le motif insolé est donc développé. Si le matériau A est opaque, le motif constitue un trou par lequel de la lumière sera transmise.

Une propriété particulière de ce type de matériau est de réagir au faisceau laser seulement au-dessus d'un seuil d'intensité lumineuse. Soit $I(r)$ la répartition d'intensité normalisée du spot lumineux, supposé de symétrie radiale, en fonction de la distance $r$ à partir de l'axe du faisceau. Appelons $Is$ la valeur de seuil d'intensité du matériau au-dessus de laquelle le changement de phase se produit. Le rayon $r_0$ du motif effectivement inscrit est donc donné par l'égalité :

$$P\frac{I(r_0)}{\int I(r)} = Is$$

où $P$ est la puissance du spot. On voit avec cette équation que le diamètre $2r_0$ du motif donc sa surface $\pi r_0^2$ est fonction de la puissance du spot. La figure 8 en donne une représentation avec des motifs circulaires de rayon $r_0$ croissant avec la puissance $P$.

Un exemple de matériau sensible à l'action d'un laser est l'oxyde de platine $PtO_x$ (état A) qui produit sous insolation une transition vers le platine $Pt$ (état B).

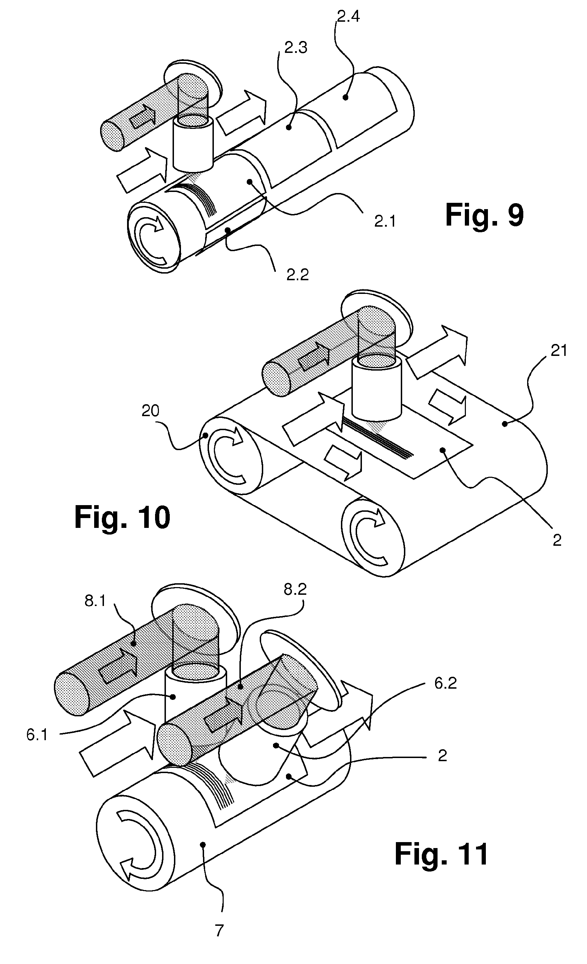

La figure 9 décrit la possibilité d'insoler plusieurs substrats avec le cas d'une insolation en parallèle de deux substrats 2.1 et 2.2 puis l'insolation de deux substrats en série 2.3 et 2.4.

Exemple numérique :

On reprend le cas d'une zone de stockage de taille 4,5 cm x 9 cm écrite au pas p de 0,8 $\mu$m.

On choisi un rayon $R1$ de 3,5 cm pour le tambour tournant. Son périmètre est donc égal à 22 cm. On peut ainsi placer deux substrats d'enregistrement pour une écriture successive sur les zones diamétralement opposées du tambour.

On prend une vitesse de rotation $Vrot$ égale à 3000 tours/minute. Le spot laser balaie la surface du substrat à la vitesse linéaire $Vlin$ suivante :

$$V_{lin} = \frac{V_{rot} \times 2\pi \times R1}{60}$$

Soit $Vlin$ = 11 m/s.

Pour garantir un pas $p$, la translation doit s'effectuer à la vitesse $Vtrans$ :

$$V_{trans} = \frac{V_{rot} \times p}{60}$$

Soit $Vtrans$ = 40 $\mu$m/s.

Pour cette valeur de vitesse on obtient une durée d'écriture d'environ 20 minutes pour deux substrats de stockage.

La vitesse de translation donne directement la durée d'écriture pour une taille de substrat donnée. La durée d'écriture dépend donc du pas p choisi et de la vitesse de rotation du tambour 7.

Le principe d'écriture revendiqué peut également s'appliquer dans le cas de la figure 10 où le mouvement du substrat de stockage relativement au faisceau laser est un mouvement de translation parallèle au substrat qui est plan. Ce mouvement est obtenu par entraînement d'une bande 21 au moyen de deux rouleaux identiques parallèles 20 de rayon $R1$ tournant dans le même sens à la vitesse $V_{rot}$. Le substrat de stockage est placé sur la bande et entraîné par elle dans une direction de défilement perpendiculaire aux axes des rouleaux. La tête de lecture se déplace en translation perpendiculairement à la direction de défilement et parallèlement aux axes des rouleaux.

Si on note $D$ la distance entre les axes des deux rouleaux, la vitesse de translation s'exprime par :

$$V_{trans} = \frac{1}{1 + D/\pi R1} \frac{V_{rot} \times p}{60}$$

Cette configuration permet de rendre la dimension de la zone de stockage indépendante du périmètre du rouleau donc de la notion de vitesse linéaire. On peut donc positionner davantage de substrats de stockage pour une écriture en parallèle à vitesse linéaire donnée.

La notion de vitesse linéaire est importante car elle donne la valeur de résolution liée aux capacités de vitesse de modulation du laser. C'est en effet l'alternance entre deux phases d'allumage successives séparées par une phase d'extinction qui permet de créer deux motifs spatialement séparés. Si $fl$ est la fréquence de modulation du laser, la distance minimum entre deux motifs est donnée par :

$$\delta = \frac{V_{lin}}{fl}$$

Une source modulable à 500 MHz permet donc d'obtenir une résolution spatiale de 22 nm largement suffisante dans le cas d'un pas de 0,8 $\mu$m entre pixels.

La résolution dans le domaine longitudinal est donnée par la précision de la translation. Des précisions de l'ordre de 10 nm sont actuellement disponibles, notamment grâce à l'usage de règles optiques de précision.

La figure 11 décrit le cas d'une insolation avec deux têtes d'écritures 6.1 et 6.2 mises en série dans le sens du défilement. Dans ce cas, les deux faisceaux 8.1 et 8.2 sont indépendants du point de vue de la modulation d'intensité qu'ils subissent. Ils permettent par exemple d'écrire deux lignes en même temps. On gagne donc un facteur temps sur la durée d'écriture, en proportion du nombre de têtes.

Ce principe est permis grâce à la linéarité du déplacement du spot d'écriture. Un mouvement en spirale tel qu'il est effectué dans l'écriture et la lecture classique de disques optiques est moins bien adapté à une telle configuration.

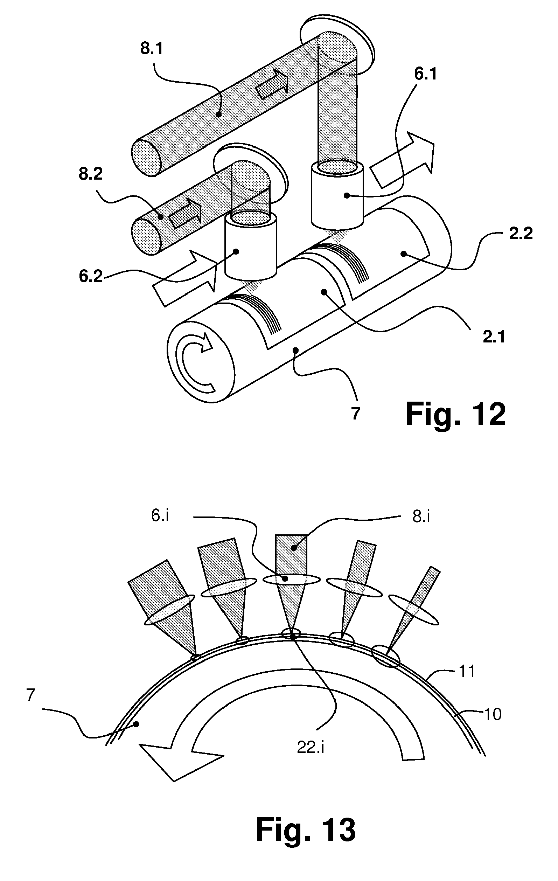

La figure 12 est un autre exemple d'utilisation de plusieurs têtes d'écriture. On est ici dans le cas d'une écriture parallèle. Les faisceaux 8.1 et 8.2 peuvent être indépendants (écriture de deux séries d'images différentes) afin de réaliser un gain de temps (chaque tête adresse une zone différente du substrat) ou pour écrire sur deux substrats dans un temps donné (chaque tête adresse un substrat 2.i). Les faisceaux 8.1 et 8.2 peuvent également provenir de la même source modulée. Dans ce cas le montage permet de dupliquer une série d'images sur deux zones de stockage. Cette disposition permettant une écriture multiple est envisageable dans les configurations des figures 10 et 11 également.

Dans ce qui précède, on a considéré qu'on modulait le laser de la tête d'écriture de manière à lui permettre de créer plusieurs diamètres de motif d'inscription conformément aux explications données en référence à la figure 7.

Cependant, on peut aussi envisager d'utiliser plusieurs faisceaux lasers d'écriture produisant chacun une dimension de motif inscrit respective : un faisceau laser est réservé à l'écriture des motifs correspondant à un premier diamètre, un autre aux motifs d'un deuxième niveau, et ainsi de suite. Dans ce cas, selon le niveau de gris à inscrire, le signal de modulation d'allumage ou extinction du laser est appliqué uniquement à un laser affecté à ce niveau de gris.

La figure 13 décrit le principe d'une telle écriture où un faisceau laser est affecté à un seul niveau de gris et à une seule dimension de motif. Chaque laser est allumé ou éteint à un instant donné (correspondant à une zone élémentaire donnée de la zone d'image) selon qu'un niveau de gris doit être ou non inscrit à cet endroit. Il y a donc plusieurs faisceaux d'écriture 8.i correspondant à l'inscription de motifs, de plus en plus larges de gauche à droite sur la figure 13, dans la couche active 11 déposée sur son substrat souple 10 (la couche de protection 12 n'est pas représentée sur la figure 13). Comme on l'expliquera plus loin, la dimension du motif inscrit est liée à la fois à la puissance du faisceau laser et à l'ouverture numérique de l'optique qui focalise le faisceau. Dans le cas de la figure 13, chaque lentille de focalisation 6.i présente sa propre ouverture numérique ONi. Comme la taille du spot est liée à l'ouverture numérique à une longueur d'onde donnée, chaque spot 22.i a une taille différente.

On peut envisager une organisation mixte dans laquelle il y a plusieurs faisceaux laser correspondant à des gammes de taille de motifs différentes, chaque faisceau étant cependant modulable en intensité pour produire plusieurs tailles de motif dans la gamme qu'elle peut produire.

Différents procédés de fabrication peuvent être envisagés pour la production des motifs d'image. Ils se basent tous sur le principe d'une structuration photonique (la couche active 11 du substrat réagit avec les photons du faisceau optique) ou d'une structuration thermique (la couche active du substrat réagit du fait de l'échauffement provoqué par le faisceau optique). Le but recherché est d'obtenir un contraste optique entre le motif inscrit et le fond du substrat. Le contraste peut être lié à un changement de réflectivité ou de transparence.

L'utilisation d'une couche active à transition de phase a été mentionnée ci-dessus. L'inscription utilise la transition entre deux états d'un même matériau. La transition est un phénomène thermique. Si le changement d'état du matériau se traduit par un changement de contraste entre une zone inscrite et une zone non inscrite, l'écriture se fait directement par le laser sans qu'une étape de développement soit nécessaire. Si le contraste est trop faible ou inexistant, le matériau de la couche active inscrite peut servir de masque de gravure d'une couche sous-jacente qui sera enlevée dans les zones exposées et conservée dans les zones non exposées (ou le contraire). La couche sous-jacente présentera le contraste désirée ; elle peut être une couche de chrome.

L'écriture pourrait aussi se faire en utilisant une résine de photolithographie intermédiaire, exposée par la tête de lecture selon des motifs de dimension variable correspondant chacun à un niveau de gris. La résine est ensuite développée et sert à graver une couche sous-jacente réfléchissante (couche de chrome par exemple) ou absorbante qui contiendra l'image définitive.

On peut également utiliser des matériaux photochromes de type colorant. Cette structuration photonique permet de modifier le contraste d'une zone insolée par rapport à un fond non insolé sans avoir recours au développement. A titre d'exemple on peut citer les colorants utilisés pour l'enregistrement de données dans les disques optiques, tels que les cyanines, phtalo-cyanine, et composés azoïques, qui ont pour particularité de présenter un contraste de réflectivité marqué et irréversible entre les zones insolées via un laser d'écriture, et les zones adjacentes non insolées.

On peut encore mettre en oeuvre une activation de la surface d'un substrat en matériau polymère dopé avec un agent métallique. Le faisceau laser brise des liaisons chimiques de sorte qu'une couche métallique peut être déposée sur les zones insolées lorsque le substrat est immergé dans une solution électrolytique.

La technique d'ablation laser peut également être employée. Une couche sensible est volatilisée sous l'effet de l'insolation laser. Le faisceau optique peut ainsi créer des ouvertures dans un fond opaque ou réfléchissant.

Ces procédés sont donnés à titre d'exemple de réalisation. D'autres procédés peuvent être mis en oeuvre dans le cadre de l'invention.

On va maintenant revenir plus en détail sur l'obtention d'un codage de niveau de gris par le diamètre du motif correspondant à un pixel :

aucun motif pour un pixel noir et une taille de motif de l'ordre du pas p entre pixels pour un pixel blanc (ou l'inverse), et des tailles intermédiaires pour des niveaux de gris intermédiaires conformément à la représentation de la figure 7.

Le motif est obtenu par un impact laser, et on propose de jouer sur la puissance de cet impact pour modifier la taille du motif.

Dans la suite on considère que la tache de focalisation du laser comporte une distribution d'énergie à symétrie circulaire de forme gaussienne, mais le raisonnement serait sensiblement le même si la distribution était elliptique.

L'intensité lumineuse s'exprime donc par la formule :

$$I(r) = I_0 \times e^{-2\frac{r^2}{w_0^2}} \tag{1}$$

où $r$ est la distance d'un point par rapport au centre du spot, $I_o$ l'intensité maximum du spot et $w_0$ un paramètre de taille appelé parfois « waist » qui caractérise les dimensions latérales du spot focalisé. Ce paramètre $w_0$ est approximativement la largeur à mi-hauteur de la gaussienne de distribution d'énergie.

Le paramètre $w_0$ est généralement fixé dans un système optique de focalisation par la longueur d'onde λ du laser et par l'ouverture numérique *ON* de l'optique de focalisation. On a en particulier la relation suivante déduite de la théorie de la diffraction (tache d'Airy) :

$$ON = \frac{a}{f} = 0{,}43 \times \frac{\lambda}{w_0} \tag{2}$$

Avec a et *f* le rayon et la longueur focale de l'optique de focalisation.

Le spot lumineux représente une certaine énergie fixée par le réglage de la puissance du laser. Il y a une correspondance entre l'intensité et l'énergie *E0* qui est l'intégrale de l'intensité *I(r)* dans le plan de focalisation. On en déduit l'expression de l'intensité maximale du spot en fonction de l'énergie :

$$I_0 = \frac{2 \times E_0}{\pi \, w_0{}^2} \qquad (3)$$

Le seuil de réponse du matériau (dont on a parlé précédemment) correspond à une intensité *Is* à partir de laquelle le matériau est modifié.

Les équations (1) et (3) donnent la valeur du rayon $r_s$ d'un motif pour un spot de taille $w_0$, d'énergie $E_0$ et pour un matériau de seuil d'intensité $I_s$ :

$$r_s{}^2 = \frac{w_0{}^2}{2} \ln\left( \frac{2 \times E_0}{I_s \times \pi \times w_0{}^2} \right) \qquad (4)$$

Le rayon du motif, pour un matériau donné, est donc fonction à la fois de l'énergie du spot et de sa taille $w_0$.

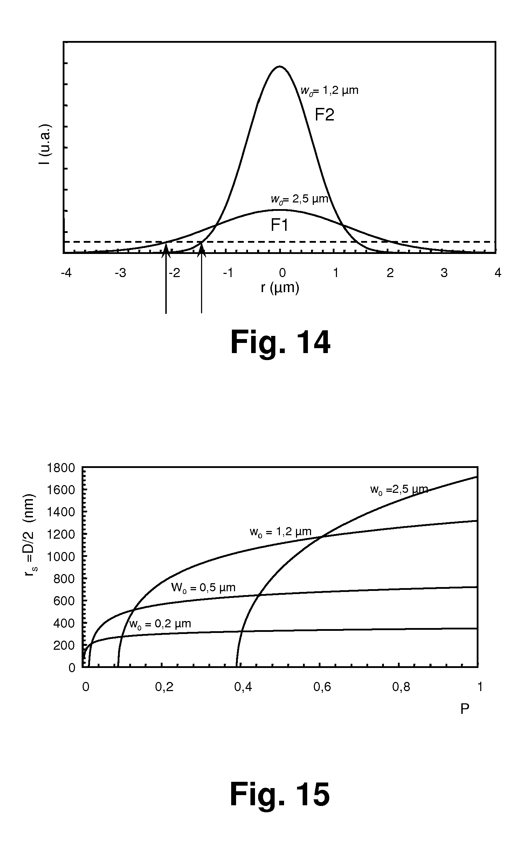

La figure 14 représente un graphique d'intensité (en unités arbitraires) en fonction de la distance au centre du faisceau pour deux faisceaux laser F1 et F2 ayant des tailles de tache de focalisation de 2,5 μm et 1,2 μm. L'énergie $E_0 = 1$ est prise arbitrairement égale à une valeur unitaire $E_0 = 1$ pour les deux faisceaux. Le trait horizontal tireté qui coupe les deux courbes simule un niveau de seuil de réactivité du matériau, par exemple égal au quart de l'intensité maximale du premier spot. L'endroit où la droite coupe les courbes définit la largeur du motif effectivement inscrit par chacun des faisceaux.

L'insolation avec le premier faisceau génère dans cet exemple un motif de rayon 2,1 μm. La distribution d'intensité du second spot est plus étroite et conduit à la formation d'un motif de 1,4 μm. Pour former avec le second spot un motif de taille 2,1 μm il faut multiplier sa puissance par un facteur supérieur à 20. Dans ce cas, l'intensité au centre du spot devient très importante et le matériau risque d'être dégradé.

Cet exemple numérique souligne tout l'intérêt de disposer d'un jeu de lentilles de focalisation de différentes caractéristiques, et plus particulièrement d'ouvertures numériques différentes, afin de couvrir un intervalle important de tailles de motif. Mais on peut jouer à la fois sur l'ouverture numérique et sur la puissance du laser.

Dans la figure 15, issue de l'équation (4), on trace les rayons disponibles pour différentes tailles $w_0$ et différents niveaux de puissance d'un spot laser focalisé. Le seuil de réactivité du matériau est fixé dans cet exemple au quart du maximum d'intensité d'un spot de taille $w_0 = 2$ μm. La puissance est en abscisse et le rayon $r_s = D/2$ du motif effectivement inscrit est en ordonnée, en nanomètres.

Comme on le voit sur cette figure 15, un spot de $w_0$ important permettrait numériquement de couvrir la gamme de rayon de motif souhaitée (par exemple de 200 nm à 1200 nm) alors qu'un spot de $w_0$ faible est limité par la gamme de puissance. Cependant pour les faibles valeurs de rayon r, une légère variation de la puissance laser peut conduire à des variations fortes de la taille du motif. Il y a donc intérêt à utiliser des spots de $w_0$ plus petits au fur et à mesure que l'on souhaite réduire la taille des motifs afin de limiter l'erreur relative sur le rayon du motif.

L'équation (4) permet de donner une expression de l'erreur relative sur le rayon du motif à partir de l'erreur relative sur la puissance du spot :

$$\frac{\Delta r_s}{r_s} = \frac{1}{2\pi \, I_s} \times \frac{E^2}{r^2} \times \frac{\Delta E}{E} \qquad (5)$$

Exemple pratique :

Prenons le cas d'une image codée sur une grille de pas 800 nm. On cherche à produire un motif circulaire dont la taille peut varier idéalement linéairement de 0 à 800 x $2^{0,5}$ nm, afin de générer les plages de niveaux de gris. Le facteur racine de 2 permet de couvrir une surface de motifs circulaire sans interstice sur la base d'une grille carrée. Soit un motif variant de 0 à 1,13 $\mu$m.

Supposons que l'on fixe un critère de précision de 10% sur la valeur de puissance du laser et que l'on souhaite se limiter alors à une erreur relative maximum de 10 % sur la taille du motif. On peut montrer qu'un choix de trois valeurs de *waist* et trois valeurs de puissance pour chacun permet de couvrir un intervalle de tailles de motif allant de 100 nm à 1 $\mu$m.

A titre d'exemple, pour obtenir un motif de taille 100 nm à 250 nm c'est un faisceau optique focalisé avec un *waist* de 200 nm qui est utilisé, la puissance du faisceau est alors comprise entre 0,02 et 0,16 (unité normalisée au maximum de la gamme). Pour obtenir un motif de taille 250 nm à 600 nm c'est un faisceau optique focalisé avec un *waist* de 500 nm qui est utilisé, la puissance du faisceau est alors comprise entre 0,07 et 0,77. Enfin, pour obtenir un motif de taille 600 nm à 1 $\mu$m c'est un faisceau optique focalisé avec un *waist* de 1200 nm qui est utilisé, la puissance du faisceau est alors comprise entre 0,41 et 1.

La réalisation d'une tête multifaisceaux peut se faire suivant deux approches :

■ un faisceau unique séparé en sous faisceaux, chacun modulé par un modulateur séparé,
■ l'utilisation de plusieurs lasers différents, synchronisés en écriture.

Compte tenu de la disponibilité de lasers peu coûteux et modulables à haute fréquence, c'est la seconde approche qui semble la plus favorable. L'obtention de spots de différentes tailles se fait ensuite en jouant sur plusieurs paramètres :

- la longueur d'onde $\lambda$ du faisceau
- la focale f de la lentille
- le rayon a du faisceau en sortie de la lentille

La focale est la solution la plus favorable, éventuellement conjuguée avec un changement de diamètre de faisceau réglé par l'ouverture numérique ON.

Dans ce cas, une distance focale respective est affectée à chaque laser, et, comme on le verra, cela implique une distance respective différente entre chacun des lasers et la couche active qui subit l'action du laser. La puissance de chacun des lasers est alors de préférence modulable, de manière qu'une surface de motif inscrit soit le résultat de la combinaison du choix d'un des lasers et d'une modulation de puissance de ce laser.

Ainsi pour obtenir les tailles de spot respectives de 200, 500 et 1200 nm on peut partir sur les paramètres suivants, avec un laser bleu à 405 nanomètres :

- $w_0$ = 200 nm ; $\lambda$ = 405 nm ; *a* = 1,5 mm ; *f* = 1,7 mm ; *ON* = 0,87
- $w_0$ = 500 nm ; $\lambda$ = 405 nm ; *a* = 1 mm ; *f* = 2,9 mm ; *ON* = 0,35
- $w_0$ = 1200 nm ; $\lambda$ = 405 nm ; *a* =1 mm ; *f* = 6,89 mm; *ON* = 0,15

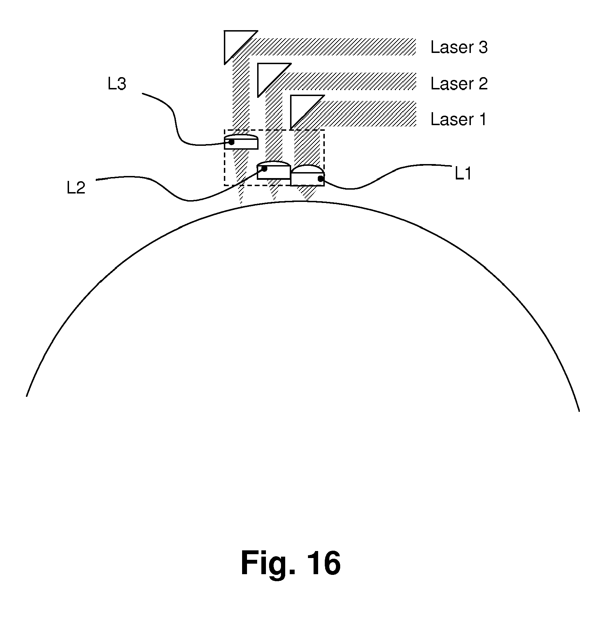

La figure 16 donne en vue agrandie la répartition des focales au dessus d'un cylindre de rayon 3,5 cm. Il y a trois sources laser et trois lentilles correspondantes situées à des hauteurs différentes au-dessus de la surface du tambour 7 pour la focalisation des faisceaux sur la couche active. Les sources laser peuvent chacune être modulée en puissance pour avoir par exemple trois puissances d'émission chacune. La lentille 1 est celle qui a la plus grande ouverture numérique, c'est donc avec elle que le maintien de la focalisation sur la couche active est réglé ; les autres optiques sont asservies sur celle-ci, les lentilles pouvant être mécaniquement solidaires les unes des autres de telle manière que si la première est correctement focalisée sur la couche active, alors les deux autres le sont aussi.

La profondeur de focalisation *dz* est liée à l'ouverture numérique par la relation :

$$dz = \frac{2\lambda}{ON^2}$$

$(6)$

Les profondeurs de focalisation des trois lentilles par rapport à la couche active seraient, dans l'exemple précédent, d'environ un micromètre pour la lentille L1, sept micromètres pour la lentille L2 et trente huit micromètres pour la lentille L3.

Un réglage fin des positions des lentilles L2 et L3 dans la direction de défilement de la tête optique et dans la direction transversale doit permettre d'ajuster non seulement l'alignement des trois lentilles sur une même piste mais également la position relative dans la direction de défilement. Ainsi, on tient compte du décalage des optiques pour que la modulation de puissance, ainsi que l'allumage et l'extinction soit effectuée en correspondance avec les positions désirées des motifs à inscrire le long de la piste par chaque faisceau.

La distance séparant les spots est en effet une donnée importante pour garantir la synchronisation des tirs laser. Cette distance peut être caractérisée lors d'une étape de calibration dans laquelle chaque tête mesure en réflexion le passage d'une perturbation (ouverture dans une couche réfléchissante). Connaissant la vitesse de rotation du cylindre, la durée de détection des différentes têtes permet de déduire la distance des points d'écriture. Les séquences d'écriture sur chaque laser sont déterminées et synchronisées en conséquence.

Pour l'alignement des têtes entre elles sur la trajectoire du spot une méthode similaire est utilisée en ajustant leur position par rapport à une perturbation présente sur le cylindre (ouverture linéaire) ou provoquée par l'allumage du premier laser.

Le procédé de stockage selon l'invention sera mis en oeuvre de la manière suivante :

Dans un premier temps, la zone d'enregistrement 2, sur support souple, est placée sur le tambour 7. Un dispositif de trous d'aspiration permet de maintenir la pièce souple plaquée.

Une seconde étape va presser le support d'enregistrement contre le tambour pour garantir un plaquage optimum. Les éléments du montage se mettent alors en mouvement et l'insolation laser de la zone 2 est effectuée, la machine recevant successivement pour chaque pixel un niveau numérique de gris et sélectionnant, en fonction de ce niveau, un des faisceaux laser et une puissance d'émission pour ce faisceau.

Une fois la zone insolée, on peut développer le support de stockage si le process le nécessite.

La zone de stockage flexible est ensuite mise en sandwich entre deux fenêtres de protection lors de la phase de packaging.

Enfin, on effectue le référencement du support de stockage par impression/gravure/collage d'une ou plusieurs étiquettes sur le cadre plastique. Si un référencement à distance est nécessaire, utilisant une puce RFID, la puce peut être initialisée à ce stade.

En résumé, l'écriture d'une zone de stockage selon l'invention allie la rapidité d'écriture et une grande résolution d'écriture. Les mouvements sont simples, les vitesses de translation et de rotation sont constantes et les niveaux de gris sont pris en compte. Il n'y a pas de zone aveugle comme dans les disques plats. On peut insoler plusieurs substrats en série ou en parallèle, en utilisant éventuellement plusieurs têtes d'écriture en parallèle ou en série. Le traitement numérique est simple car le maillage des pixels est uniforme et quasi linéaire et non pas en forme de spirale comme dans les disques plans classiques (maillage courbe et non uniforme entre le centre et la périphérie du disque).

**Revendications**

1. Procédé de stockage d'images sur un support (1) pouvant être gravé à partir d'un procédure d'écriture par un faisceau laser, dans lequel une zone d'écriture (2) comprend une multiplicité de plages (3) de dimensions latérales inférieures à 10 millimètres réservées chacune à une image, et une plage réservée à une image comprend autant de zones élémentaires qu'il y a de pixels d'image à stocker, l'image stockée dans une plage pouvant être lue par des moyens d'agrandissement optique, **caractérisé en ce que** les zones élémentaires comportent des motifs inscrits sous forme de taches de diamètres différents, une valeur de diamètre représentant un niveau de gris respectif parmi n niveaux possibles, n étant un entier supérieur à 2.

2. Procédé de stockage d'images selon la revendication 1, **caractérisé en ce qu'**on utilise plusieurs faisceaux lasers focalisés par des lentilles (6.i) ayant des ouvertures numériques différentes, pour inscrire des motifs correspondant à des gammes de diamètres différentes, chaque faisceau laser étant affecté à une plage de diamètres respective.

3. Procédé de stockage selon la revendication 2, **caractérisé en ce que** la puissance de chaque laser est modulable en fonction d'un niveau de gris reçu pour un pixel déterminé pour définir un diamètre de motif correspondant à ce niveau de gris à la fois par le choix d'un laser correspondant à une gamme de diamètres de motif et par le choix d'une puissance d'émission du laser.

4. Procédé de stockage selon l'une des revendications 1 à 3, **caractérisé en ce qu'**une zone élémentaire correspondant à un pixel est divisée en K sous-zones pouvant chacune recevoir un motif ayant un diamètre pris parmi n=N/K diamètres possibles, N étant le nombre total de niveaux de gris souhaité pour chaque pixel.

**5.** Système de stockage d'images sur un substrat inscriptible au moyen d'un laser d'écriture, les images étant stockées sous forme analogique, lisible par des moyens d'agrandissement optique, dans une zone d'écriture (2) comprenant une multiplicité de plages (3) de dimensions inférieures à 10 millimètres de côté correspondant chacune à une image, chaque plage comprenant autant de zones élémentaires qu'il y a de pixels de l'image à stocker, système **caractérisé en ce qu'**il comporte une tête optique (L1, L2, L3) à faisceau laser et des moyens de commande de la tête optique, aptes à recevoir, pour l'écriture de chaque pixel, une information de niveau de gris du pixel, et aptes à commander l'inscription par la tête, dans une zone élémentaire correspondant au pixel, d'un motif ayant un diamètre déterminé parmi n diamètres représentant chacun un niveau de gris respectif parmi n, n étant un entier supérieur à 2.

**6.** Système de stockage d'images selon la revendication 5, **caractérisé en ce que** la tête optique (L1, L2, L3) comporte des moyens pour émettre plusieurs faisceaux laser à travers des optiques respectives d'ouvertures numériques différentes placées à des hauteurs différentes au-dessus du substrat de stockage et des moyens pour sélectionner un faisceau laser déterminé en fonction du niveau de gris reçu.

**7.** Système de stockage d'images selon l'une des revendications 5 et 6, **caractérisé en ce qu'**il comporte des moyens de commande de puissance du faisceau laser en fonction du niveau de gris reçu.

**8.** Système de stockage d'images selon l'une des revendications 5 à 7, **caractérisé en ce qu'**il comporte un tambour cylindrique tournant (7) et des moyens pour appliquer le substrat de stockage contre la surface cylindrique du tambour, la tête optique étant placée devant ce support et pouvant se déplacer en translation parallèlement à l'axe de rotation du tambour.

**9.** Support de stockage d'images comprenant une couche de stockage (11) divisée en plages de dimensions latérales inférieures à 10 millimètres affectées chacune à une image inscrite dans le support, une plage inscrite comprenant des zones élémentaires correspondant chacune à un pixel de l'image stockée, et l'image stockée dans la zone étant observable à l'oeil par des moyens d'agrandissement optique, **caractérisé en ce que** les zones élémentaires comprennent des motifs sous forme de taches de diamètres différents parmi n diamètres possibles correspondant chacun à un niveau de gris du pixel, n étant un entier supérieur à 2.

**10.** Support de stockage selon la revendication 9, **caractérisé en ce que** les zones élémentaires correspondant à un pixel sont divisées en K sous-zones comportant chacune un motif ayant un diamètre pris parmi n=N/K diamètres possibles, N étant le nombre total de niveaux de gris possible pour les pixels.

**11.** Support de stockage selon l'une des revendications 9 et 10, **caractérisé en ce que** la couche de stockage est formée sur un substrat souple.

**12.** Support de stockage selon l'une des revendications 9 à 11, **caractérisé en ce que** le pas des zones élémentaires est p et le diamètre du plus grand motif élémentaire est égal à $px2^{1/2}$.

**x : date : reference**

**Fig. 1**

**Fig. 2**

**Fig. 3**

5a

5b

5c

photoX.jpg – day/month/year
Comment ###################################################
###################################################
###################################################
###########################

5d

3

# Fig. 4

**Fig. 5**

**Fig. 6**

**Fig. 7**

**Fig. 8**

**Fig. 9**

**Fig. 10**

**Fig. 11**

8.1

6.1

8.2

6.2

2.2

2.1

7

**Fig. 12**

6.i

8.i

7

11

10

22.i

**Fig. 13**

# Fig. 14

# Fig. 15

**Fig. 16**

Laser 3

Laser 2

Laser 1

L3

L2

L1

Europäisches
Patentamt

European
Patent Office

Office européen
des brevets

# RAPPORT DE RECHERCHE EUROPEENNE

Numéro de la demande

EP 09 15 4424

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | US 2005/046817 A1 (WOLFE GENE J [US] ET AL) 3 mars 2005 (2005-03-03) * alinéa [0028] * * alinéa [0130] - alinéa [0131]; revendication 34; figures 19,23,27,28 * | 1,5,7-9, 11,12 | INV. G11B7/0045 G11B7/013 |
| A | ----- | 2-4,6,10 | |
| Y | JP 2001 256646 A (HITACHI LTD) 21 septembre 2001 (2001-09-21) * le document en entier * ----- | 1,5,7-9, 11,12 | |
| A | JP 58 121145 A (HITACHI LTD) 19 juillet 1983 (1983-07-19) * abrégé * ----- | 8 | |

DOMAINES TECHNIQUES
RECHERCHES (IPC)

G03B
G11B

Le présent rapport a été établi pour toutes les revendications

| Lieu de la recherche | Date d'achèvement de la recherche | Examinateur |
|---|---|---|
| La Haye | 18 juin 2009 | Annibal, Stewart |

**ANNEXE AU RAPPORT DE RECHERCHE EUROPEENNE
RELATIF A LA DEMANDE DE BREVET EUROPEEN NO.**

EP 09 15 4424

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

18-06-2009

| Document brevet cité au rapport de recherche | | Date de publication | Membre(s) de la famille de brevet(s) | | Date de publication |
|---|---|---|---|---|---|
| US 2005046817 | A1 | 03-03-2005 | US<br>US | 2007297312 A1<br>2008124003 A1 | 27-12-2007<br>29-05-2008 |
| JP 2001256646 | A | 21-09-2001 | AUCUN | | |
| JP 58121145 | A | 19-07-1983 | JP<br>JP | 1737420 C<br>4019551 B | 26-02-1993<br>30-03-1992 |

EPO FORM P0460

Pour tout renseignement concernant cette annexe : voir Journal Officiel de l'Office européen des brevets, No.12/82

## RÉFÉRENCES CITÉES DANS LA DESCRIPTION

**Documents brevets cités dans la description**

- US 6442296 B
- EP 1310950 A